# EUROPEAN PATENT APPLICATION

(11) **EP 4 831 985 A1**
(43) Date of publication of application: **28.10.2026**
(21) Application number: 26174617.6
(22) Date of filing: 24.04.2026
(51) Int. Cl.: G10H 1/00, G10H 1/36

(54) **METHOD, APPARATUS, DEVICE AND STORAGE MEDIUM FOR GENERATING MUSIC**

(30) Priority: 25.04.2025 CN 202510537436
(71) Applicant: Bytedance Technology Ltd., KY1 - 1205 Grand Cayman Cayman Islands (KY)
(72) Inventor: NIE, Dongbai, Beijing 100028 (CN)
(74) Representative: Marks & Clerk LLP

(57) **Abstract**

According to the embodiments of the disclosure, a method, apparatus, device, a storage medium for generating music are provided. The method includes: obtaining a first music content; presenting a second lyric content generated based on a first lyric content of the first music content, in response to receiving a first generation request; and providing a second music content generated based on a third lyric content and the first music content, in response to receiving a second generation request, where the third lyric content is obtained in accordance with the second lyric content.

## Description

### TECHNICAL FIELD

Example embodiments of the disclosure generally relate to the field of computers, and in particular, to a method, apparatus, device, and computer-readable storage medium for generating music.

### BACKGROUND

With the rapid development of the Internet, music adaptation, as an important type of audio creation, is widely used in various fields. For example, music adaptation includes the adaptation lyrics without changing the music to generate new music. How to improve the efficiency and quality of music generation is a key issue.

### SUMMARY

In a first aspect of the disclosure, a method for generating music is provided. The method includes: obtaining a first music content; presenting a second lyric content generated based on a first lyric content of the first music content, in response to receiving a first generation request; and providing a second music content generated based on a third lyric content and the first music content, in response to receiving a second generation request, where the third lyric content is obtained in accordance with the second lyric content.

In a second aspect of the disclosure, an apparatus for generating music is provided. The apparatus includes: an obtaining module configured to obtain a first music content; a presenting module configured to present a second lyric content generated based on a first lyric content of the first music content, in response to receiving a first generation request; and a providing module configured to provide a second music content generated based on a third lyric content and the first music content in response to receiving a second generation request, the third lyric content obtained in accordance with the second lyric content.

In a third aspect of the disclosure, an electronic device is provided. The device includes at least one processor; and at least one memory, the at least one memory coupled to the at least one processor, and storing instructions executable by the at least one processor, the instructions, when executed by the at least one processor, cause the device to perform the method of the first aspect.

In a fourth aspect of the disclosure, a computer-readable storage medium is provided. The computer-readable storage medium stores a computer program executable by a processor to perform the method of the first aspect.

It should be understood that the content described in this Summary section is neither intended to identify key or essential features of the embodiments of the disclosure, nor is it intended to limit the scope of the disclosure. Other features of the disclosure will be readily envisaged through the following description.

### BRIEF DESCRIPTION OF THE DRAWINGS

The above and other features, advantages and aspects of the embodiments of the disclosure will become more apparent in combination with the drawings and with reference to the following detailed description. In the drawings, the same or similar reference symbols refer to the same or similar elements, where:
Fig. 1 illustrates a schematic diagram of an example environment in which the embodiments of the disclosure can be implemented;
Fig. 2A-2F illustrate example interfaces according to some embodiments of the disclosure;
Fig. 3 illustrates a flowchart of a process for generating music according to some embodiments of the disclosure;
Fig. 4 illustrates a schematic structural block diagram of an apparatus for generating music according to some embodiments of the disclosure; and
Fig. 5 illustrates a block diagram of an electronic device capable of implementing multiple embodiments of the disclosure.

### DETAILED DESCRIPTION OF EMBODIMENTS

The embodiments of the disclosure will be described in more detail below with reference to the drawings. Although some embodiments of the disclosure are shown in the drawings, it should be understood that the disclosure may be implemented in various forms, and should not be interpreted as limited to the embodiments set forth herein. On the contrary, these embodiments are provided for a more thorough and complete understanding of the disclosure. It should be understood that the drawings and embodiments of the disclosure are only for illustrative purposes, and are not intended to limit the protection scope of the disclosure.

It should be noted that the titles of any section/subsection provided herein are not restrictive. Various embodiments are described throughout the disclosure, and any type of embodiments may be included under any sections/subsections. In addition, embodiments described in any section/subsection may be combined with any other embodiments described in the same section/subsection and/or different section/subsection in any manner.

In the description of the embodiments of the disclosure, the term "include/comprise" and similar terms should be understood as open-ended inclusion, that is, "include/comprise but not limited to". The term "based on" should be understood as "based at least in part on". The term "one embodiment" or "the embodiment" should be understood as "at least one embodiment". The term "some embodiments" should be understood as "at least some embodiments". Other explicit and implicit definitions may also be included below. The terms "first", "second", etc. may refer to different or same objects. Other explicit and implicit definitions may also be included below.

The embodiments of the disclosure may involve user data, data acquisition and/or use, etc. These aspects all follow corresponding laws, regulations and provisions. In the embodiments of the disclosure, data collection, acquisition, processing, forwarding, and use, etc. are carried out under the premise that the user is aware of and confirms it. Accordingly, when implementing the embodiments of the disclosure, the type, scope of use, usage scenarios, etc., of the data or information that may be involved should be informed to the user, and the user's authorization should be obtained in an appropriate manner according to relevant laws and regulations. The specific notification and/or authorization methods may vary according to actual situations and application scenarios, and the scope of the disclosure is not limited in this regard.

If personal information processing is involved in solutions or embodiments described in the specification, the processing will be carried out only with a legal basis (for example, with the consent of the subject of the personal information, or as necessary to perform a contract, etc.), and will only be processed within the prescribed or agreed scope. If a user refuses to process personal information other than that required for basic functions, it will not affect the user's ability to use the basic functions.

The embodiments of the disclosure provide a solution for generating music. According to this solution, first music content is obtained; second lyric content generated based on first lyric content of the first music content is presented in response to receiving a first generation request; and second music content generated based on third lyric content and the first music content is provided in response to receiving a second generation request, where the third lyric content is obtained in accordance with the second lyric content.

Based on this method, the embodiments of the disclosure can quickly generate other second lyric content based on the first lyric content of the first music content in response to the generation request, which improves the efficiency of lyric adaptation. In addition, the embodiments of the disclosure may further determine the third lyric content based on the second lyric content, and quickly generate new music content according to the third lyric content and the first music content, which not only ensures the quality of music content generation, but also improves the efficiency of music generation.

### Example Environment

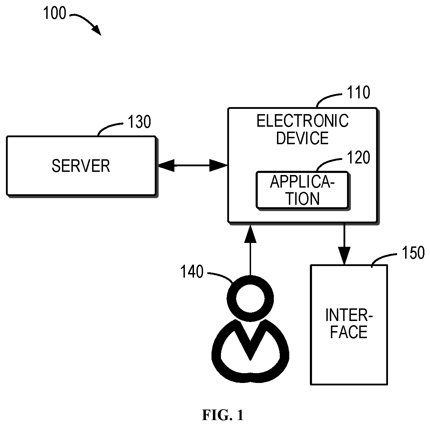

Fig. 1 illustrates a schematic diagram of an example environment 100 in which the embodiments of the disclosure can be implemented. As shown in Fig. 1, the example environment 100 may include an electronic device 110.

In this example environment 100, an application 120 supporting interface interactions may run on the electronic device 110. The application 120 may be any appropriate type of application for interface interactions, examples of which may include, but are not limited to, a music application or other appropriate applications.

In the environment 100 of Fig. 1, if the application 120 is active, the application 120 may provide a user 140 with a presentation interactive interface 150.

In some embodiments, the interactive interface may also be provided by a browser of the electronic device 110, for example.

In some embodiments, the electronic device 110 communicates with a server 130 to implement the provision of services of the application 120. The electronic device 110 may be any type of device having a display device, such as a mobile terminal, a fixed terminal, or a portable terminal, including a mobile phone, a desktop computer, a laptop computer, a notebook computer, a netbook computer, a tablet computer, a media computer, a multimedia tablet, a palmtop computer, a portable game terminal, a VR/AR device, a personal communication system (PCS) device, a personal navigation device, a personal digital assistant (PDA), an audio/video player, a digital camera/video camera, a positioning device, a TV receiver, a radio broadcast receiver, an e-book device, a game device, or any combination of the foregoing, including accessories and peripherals of these devices or any combination thereof. In some embodiments, the electronic device 110 may also support any type of interface for a target user (such as "wearable" circuitry, etc.).

The server 130 may be an independent physical server, a server cluster or a distributed system composed of multiple physical servers, or a cloud server that provides basic cloud computing services such as cloud services, cloud databases, cloud computing, cloud functions, cloud storage, network services, cloud communications, middleware services, domain name services, security services, content delivery networks, and big data and artificial intelligence platforms. The server 130 may include, for example, a computing system/server, such as a mainframe, an edge computing node, a computing device in a cloud environment, and so on. The server 130 may provide backstage services for the application 120 supporting interface interaction in the electronic device 110.

A communication connection may be established between the server 130 and the electronic device 110. The communication connection may be established by wired or wireless means. The communication connection may include, but is not limited to, a Bluetooth connection, a mobile network connection, a Universal Serial Bus (USB) connection, a Wireless Fidelity (WiFi) connection, etc., and the embodiments of the disclosure are not limited in this regard. In the embodiments of the disclosure, the server 130 and the electronic device 110 may implement signaling interaction through the communication connection therebetween.

It should be understood that the structure and function of each element in the environment 100 are described for illustrative purposes only, without suggesting any limitation on the scope of the disclosure.

Some example embodiments of the disclosure will be described below with continued reference to the drawings.

### Example Process

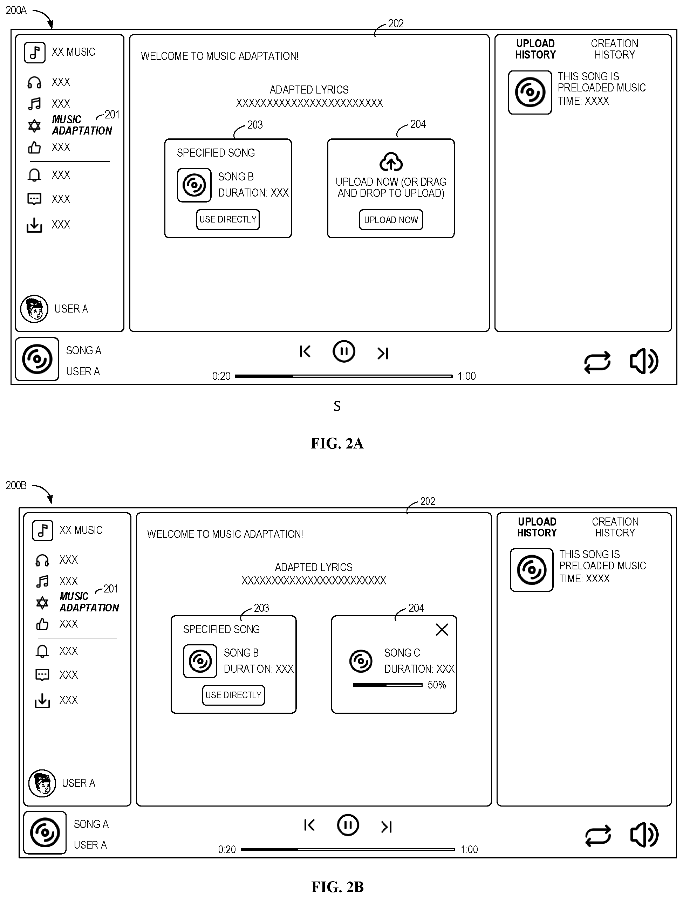

An example interaction process according to the embodiments of the disclosure will be described below with reference to Figs. 2A-2F. Figs. 2A-2F illustrate example interactive interfaces 200A-200F according to some embodiments of the disclosure. The interactive interfaces 200A-200F may be provided, for example, by the electronic device 110 shown in Fig. 1. In some embodiments, the interactive interfaces 200A-200F may be provided , for example, by the application 120 or the browser of the electronic device 110. For example, the interactive interfaces 200A-200F may be web pages that provide music generation services, and the like.

In some embodiments, the electronic device 110 may present an interface 200A as shown in Fig. 2A. In some embodiments, the interface 200A may be any appropriate interface, such as a music playback interface or a music search interface. The interface 200A may be configured to present the music content currently being played (such as song A currently being played is presented in the interface 200A) or the music content that is paused, and so on. In some embodiments, the music content may be any appropriate content including lyric content and melody information. The lyric content is used to express the theme or emotion of the lyrics in text form. The melody information indicates the basic rhythm, pitch, etc., of the music content. As an example, the music content may be a song.

In some embodiments, the electronic device 110 may provide a navigation bar associated with the music content in the interface 200A. The electronic device 110 may provide some functional components (functional tabs) associated with the music content in the navigation bar, and these functional components may correspond to different functions associated with the music content. These functional components may be a music favorite component, a play history component, etc., which will not be described in detail here.

Taking Fig. 2A as an example, the electronic device 110 may provide a component 201 in the navigation bar. The component 201 may be used to support secondary creation of music content (music re-creation or music adaptation), where secondary creation of music content is characterized by the creation of new music content via modification, processing and innovation based on the original music content (the first music content) in any appropriate manner.

Further, the electronic device 110 may present a music configuration panel 202 in the interface 200A in response to receiving a selection of the component 201. The music configuration panel 202 may be configured to present configuration entries for multiple music contents, to support the user to import the first music content for which secondary creation is to be perform based on any of the multiple configuration entry. The music configuration panel 202 may be presented in the interface 200A in any appropriate form, for example, a floating window or an embedded form.

Taking Fig. 2A as an example, the electronic device 110 may present a configuration entry 203 and a configuration entry 204 in the music configuration panel 202. The configuration entry 203 may support the user to select a music content from multiple music contents that may be provided by the application 140 as the first music content. For example, the electronic device 110 may present a default music content at the configuration entry 203, and present a select control associated with the default music content (such as the select control "use directly" shown in Fig. 2A). Further, the electronic device 110 may determine to use the default music content as the first music content for secondary creation, in response to a selection of the select control. The default music content may be any appropriate music content recommended to the user for secondary creation, such as a song in a song list of user A in the application 140.

In some embodiments, the configuration entry 204 may support the user to upload or specify a music content in any path as the first music content. Specifically, the music content may be a music content saved locally in the electronic device 110, or a music content corresponding to any other appropriate path. Specifically, the user may upload the first music content based on drag-and-drop or file selection operation. For example, the user may drag the music content to be adapted to the configuration entry 204, to use the dragged music content as the first music content. For another example, the user may click on the configuration entry 204. At this point, the electronic device 110 may present a group of candidate music contents to support the user to select any music content from the group of candidate music contents as the first music content.

In some embodiments, the uploaded music content may correspond to any appropriate file format, such as MP3, WAV, M4A, etc., which will not be described in detail here.

In some embodiments, before determining the music uploaded or selected by the user as the first music content, the electronic device 110 may first perform predetermined security detection on the music content selected and uploaded by the user, so as to determine whether the music content uploaded by the user meets the security requirements. This predetermined security detection may be performed to detect against any appropriate security level, for example, include but not limited to a detection of whether the file type of the uploaded file content meets the requirements, a detection of whether the file size meets the requirements, the detection of whether the music content meets the security requirements, and so forth. Further, the electronic device 110 may present prompt information about the upload result in the interface based on the result of the security detection. This upload result may include multiple states such as uploading, successfully uploaded, upload failed (with reasons), etc. For example, if the security detection result indicates a failure, the electronic device 110 may present prompt information in the interface about the failed upload. For another example, if the security detection result indicates a pass, the electronic device 110 may present prompt information in the interface about the successful upload. For another example, if the security detection is still in progress, the electronic device 110 may present prompt information in the interface about the ongoing upload. Specifically, the prompt information about the ongoing upload may also indicate specific progress information of the upload.

Taking Fig. 2B as an example, the electronic device 110 may present that the progress of the upload corresponding to song C is 50% in an interface 200B, in response to the user uploading song C based on the configuration entry 204, to indicate that song C is still in the process of uploading.

In some embodiments, the electronic device 110 may further present detailed information of the uploaded music content in the interface 200B. The detailed information may be any appropriate information, such as music duration information, music upload path information, etc. Taking Fig. 2B as an example, the electronic device 110 may present the duration corresponding to song C in the interface 200B.

In some embodiments, the electronic device 110 may further present an upload history, a creation history, etc., in the interface 200B. The upload history represents the music content historically uploaded by the user and used for secondary creation. The creation history represents the historical music content obtained after historical secondary creation by the user.

In some embodiments, the electronic device 110 may use the music content uploaded by the user as the first music content for secondary creation. In some other embodiments, the electronic device 110 may further perform cropping on the uploaded music content based on a cropping request for the uploaded music content, in response to receiving the cropping request from the user, and use the music content segment obtained after cropping as the first music content. At this point, the uploaded music content may be referred to as reference music content, and the music content segment obtained after cropping is the first music content.

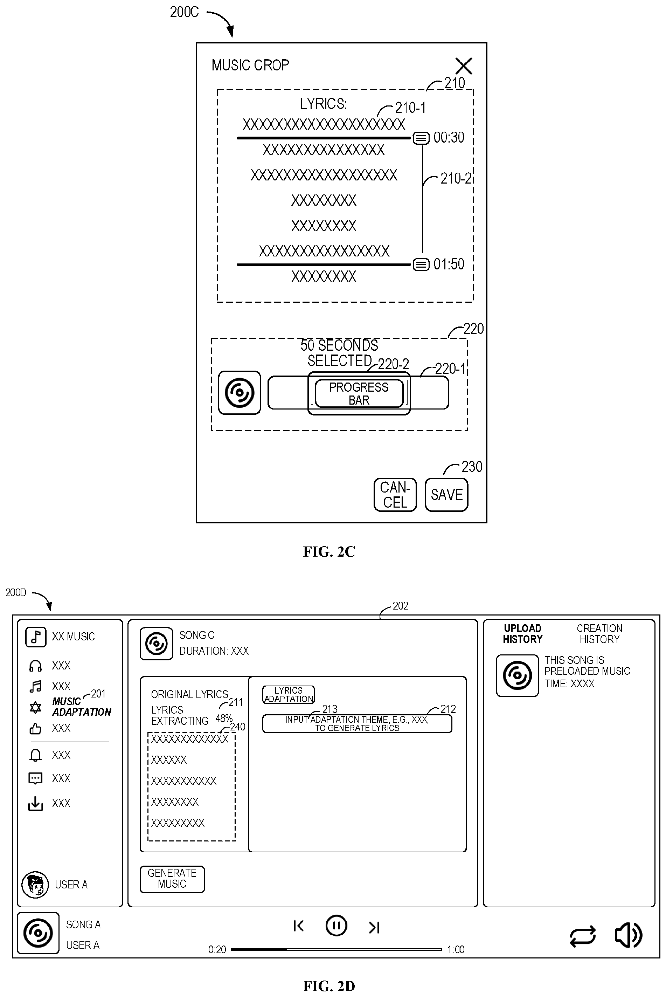

Taking Fig. 2C as an example, the electronic device 110 may present an interface 200C (crop interface) as shown in Fig. 2C, in response to receiving any appropriate operation on song C. As an example, the electronic device 110 may present the interface 200C, in response to receiving a click operation on song C in the interface 200B. As another example, the electronic device 110 may further present a crop entry (not shown) in the interface 200B. Further, the electronic device 110 may present the interface 200C, in response to receiving a selection of the crop entry.

As shown in Fig. 2C, the electronic device 110 may present an edit control 210 (first edit control) and an edit control 220 (second edit control) in the interface 200C. As an example, the edit control 210 and the edit control 220 may be presented in any appropriate area of the interface 200C, for example, the electronic device 110 may present the edit control 210 in the upper area of the interface 200C, and present the edit control 220 in the lower area of the interface 200C, and so forth.

In some embodiments, the electronic device 110 may present lyrics 210-1 corresponding to song C in the edit control 210. In some embodiments, the user may perform a first operation via the edit control 210 to select a portion of the lyrics 210-1, so that the electronic device 110 may determine the selected portion of the lyrics 210-1 via the edit control 210. The first operation may be any appropriate operation. As an example, the electronic device 110 may present a first input box (not shown) in the interface 200C to indicate that the user may input a first start point and a first end point (such as two lines of lyrics) based on the first input box, and then the electronic device 110 may determine the selected portion of the lyrics 210-1, in response to receiving the first start point and the first end point. As another example, the electronic device 110 may present crop handles 210-2 in the interface 200C to indicate that the user may drag both ends of the crop handles to select the first start point and the first end point from the lyrics 210-1. Further, the electronic device 110 may determine the selected portion of the lyrics 210-1, in response to receiving a selection of the first start point and the first end point.

Further, the electronic device 110 may crop song C based on the selected portion of the lyrics 210-1 (for example, the user clicks a control 230 shown in Fig. 2C), to obtain the first music content. Specifically, the electronic device 110 may determine the song segment corresponding to the selected portion of the lyrics 210-1 in song C as the first music content.

In some embodiments, the edit control 220 may be configured to present a timeline 220-1 associated with song C. The timeline 220-1 is a horizontal bar area with markers indicating the music playback progress. The user may preview any part of the music by dragging the playhead on the timeline 220-1.

In some embodiments, the user may perform a second operation via the edit control 220 to select a segment of the timeline, so that the electronic device 110 may determine the selected segment of the timeline 220-1 via the edit control 220. The second operation may be any appropriate operation. As an example, the electronic device 110 may present a second input box (not shown) in the interface 200C to indicate that the user may input a second start point and a second end point (such as a start time and an end time) based on the second input box, and then the electronic device 110 may determine the selected segment of the timeline 220-1, in response to receiving the second start point and the second end point. As another example, the electronic device 110 may present crop handles 220-2 in the interface 200C to indicate that the user may drag both ends of the crop handles 220-2 to select the second start point and the second end point of the timeline 220-1. Further, the electronic device 110 may determine the selected segment of the timeline 220-1, in response to receiving a selection of the second start point and the second end point.

Further, the electronic device 110 may crop song C based on the selected segment of the timeline 220-1, to obtain the first music content, in response to determining the selected segment of the timeline 220-1. Specifically, the electronic device 110 may determine the segment of the song corresponding to the selected segment of the timeline 220-1 in song C as the first music content.

In order to ensure the consistency of the content cropped based on the edit control 220 and the edit control 210, the electronic device 110 may adjust the selected segment in the second edit control in coordination based on the first operation on the edit control 210. For example, when the user drags the crop handles 210-2 to select the lyrics segment corresponding to the third line to the eighth line of lyrics, the electronic device 110 may adjust the position of the crop handles 220-2, so that the segment selected by the crop handles 220-2 is the segment corresponding to the third line to the eighth line of lyrics in the timeline.

In some embodiments, the electronic device 110 may adjust the selected portion in the first edit control in coordination based on the second operation on the edit control 220. For example, when the user drags the crop handles 220-2 to select the segment corresponding to the third line to the eighth line of lyrics, the electronic device 110 may adjust the position of the crop handles 210-2, so that the portion selected by the crop handles 210-2 is the portion corresponding to the third line to the eighth line of lyrics in the lyrics.

Taking Fig. 2D as an example, the electronic device 110 may present an interface 200D (first interface) as shown in Fig. 2D, in response to obtaining the first music content. In some embodiments, the electronic device 110 may present a first lyric content 240 corresponding to the first music content in the interface 200D. As an example, the electronic device 110 may recognize the first lyric content included in the first music content based on automatic speech recognition (ASR) technology.

In order to improve efficiency, the electronic device 110 may recognize and present each of the lyric segments in the first lyric content in a streaming manner. For ease of prompting, the electronic device 110 may further present progress information about the recognition or presentation of the lyrics included in the first music content in the interface 200D. Taking Fig. 2D as an example, the electronic device 110 may present progress information 211 in the interface 200D to indicate that 48% of the lyrics included in song C have been recognized and presented.

In some embodiments, the electronic device 110 may receive a first generation request based on input information received via the interface 200D. The first generation request is used to indicate that a second lyric content is generated based on the first lyric content corresponding to the first music content. In some embodiments, the input information may indicate at least one attribute of the second lyric content to be generated. The at least one attribute may correspond to any appropriate attribute, such as theme, style, language, rhyme, word count limit corresponding to each line of lyrics, etc. The input information may be, for example, text content input via the interface 200D or a selection of at least one candidate item in the interface 200D, etc., which will not be described in detail here.

Taking Fig. 2D as an example, the electronic device 110 may present an input text box in the interface 200D to indicate that the user may input the text content via the interface 200D. The text content may be any appropriate content, such as the style, rhyme, language, theme, etc., corresponding to the second lyric content to be generated. As an example, the electronic device 110 may present a theme input box 213 in the interface 200D to indicate that the user may input a music theme (such as "sweet", "inspirational", "funny", etc.) corresponding to the second lyric content based on the theme input box 213.

In some embodiments, the electronic device 110 may further present at least one candidate item (not shown) in the interface 200D. The at least one candidate item may be any appropriate candidate item that may assist in the generation of the second lyric content. For example, the electronic device 110 may present a group of theme candidate items in the interface 200D to indicate that the user may determine a theme target item from the group of theme candidate items.

Further, the electronic device 110 may receive the first generation request, in response to receiving the text content input via the interface 200D or a selection of the at least one candidate item and in accordance that a generate control 212 is selected. Further, the electronic device 110 may present the second lyric content generated based on the first lyric content of the first music content, in response to receiving the first generation request.

In some embodiments, the second lyric content may be lyric content associated with the first lyric content, which is obtained by adapting the first lyric content. As an example, the second lyric content is not exactly the same as the corresponding lyrics in the first lyric content, but may have similar attributes.

Taking the server generating the second lyric content as an example, the generation process of the second lyric content is described. It should be noted that, in addition to being generated by the server, the second lyric content may also be generated by other devices (such as the electronic device 110), which will not be described in detail here.

In some embodiments, the server may provide the first lyric content to a model to generate second song content.

In some other embodiments, the server may provide the first lyric content and prompt information to the model, to generate the second lyric content. The model may be any appropriate machine learning model, such as a generative model. The prompt information is guidance information used to guide the model how to generate the second lyric content based on the first lyric content. In some embodiments, the prompt information may indicate at least one lyric constraint. The at least one lyric constraint may be used to constrain the correlation between the first lyric content and the second lyric content, and may also constrain the attribute information of the second lyric content, etc. For example, the lyric constraint may constrain the number of the sentences (a sentence may also be referred to as a line of lyrics) included in the generated second lyric content, the length of each line of lyrics in the generated second lyric content (length constraint), where the length may be the number of words included in each lyric, and the keywords included in each sentence in the second lyric content should be consistent with the keywords included in the first lyric content. The lyric constraint may also constrain that the second lyric content retains the whitespace or the antithesis feature in the first lyric content, punctuation marks and special characters are disabled in the second lyric content, the second lyric content may not include sensitive content, and the second lyric content satisfies palatability detection (to ensure that the lyric content is catchy), etc.

As an example, the at least one lyric constraint may indicate that the number of sentences included in the first lyric content is the same as the number of sentences included in the second lyric content. For example, if song C includes 18 lines of lyrics, 18 lines of adapted lyrics are also generated based on these 18 lines of lyrics in song C.

As an example, the at least one lyric constraint may indicate a length constraint, and the length constraint is obtained in accordance with the lengths of multiple lines of lyrics in the first lyric content. As an example, for each line of lyrics in the first lyric content, the at least one lyric constraint may indicate that the difference between the length of the lyric in the first lyric content and the length of the corresponding lyric in the second lyric content is less than a threshold. For example, if the first line of lyrics in song C includes 4 words and the threshold is 2, the number of words included in the adapted lyric corresponding to the first line of lyrics may be 2 to 6 words.

As an example, for each line of lyrics in the first lyric content, the at least one lyric constraint may indicate that the keywords included in the lyric in the first lyric content and the keywords included in the corresponding lyric in the second lyric content should be kept the same as much as possible. For example, if the first line of lyrics in song C is "XXXYYZZZ", the adapted lyric corresponding to the first line of lyrics may be "XXXCCZZZ".

In some embodiments, the electronic device 110 may obtain the media content generated by the model. Further, the electronic device 110 may directly determine the media content generated by the model as the second lyric content.

In order to improve the quality of the generated second lyric content, in some other embodiments, the electronic device 110 may obtain intermediate media content generated by the model. Further, the electronic device 110 may determine whether the intermediate lyric content includes a lyric part that does not satisfy a preset constraint. Further, the electronic device 110 may adjust the lyric part of the intermediate lyric content based on the first lyric content to determine the second lyric content, in response to the intermediate lyric content including the lyric part that does not satisfy the preset constraint.

As an example, if the lyric content of the intermediate media content generated by the model corresponds to a predetermined language, and the predetermined language is different from the language corresponding to the lyrics of the first music content, the electronic device 110 may map the lyric content corresponding to the predetermined language to the positions and the lyric text of the first lyric content in a one-to-one correspondence, to determine the second lyric content, thereby ensuring that the subsequently generated new music content maintains the same rhyme and rhythm as the first music content.

In some embodiments, in order to present the difference between the first lyric content and the second lyric content more clearly, the electronic device 110 may present at least one prompt element in association with the second lyric content. The at least one prompt element indicates the difference between the first lyric content and the second lyric content. The at least one prompt element may be any appropriate element, such as text, image, sticker, etc., which will not be described in detail here.

Specifically, the at least one prompt element includes a first prompt element, and the electronic device 110 may determine whether a first length difference between a first sentence in the first lyric content and a second sentence in the second lyric content indicated by the first prompt element is greater than a first threshold. The first sentence may be any line of lyrics in the first lyric content, and the second sentence may be any line of lyrics in the second lyric content, but it is necessary to ensure that the first sentence and the second sentence have a predetermined correlation, that is, the sentence obtained after adapting the first sentence is the second sentence. The first threshold may be any appropriate threshold, such as 3, etc., which will not be described in detail here.

It should be noted that if there is the first length difference between the first sentence and the second sentence, but the first length difference is less than or equal to the first threshold, the electronic device 110 may also present a third prompt element for the first length difference. The third prompt element is used to indicate the difference between the first sentence and the second sentence. For ease of distinction, the electronic device 110 may set the first prompt element and the third prompt element in different display forms. For example, if the first length difference is greater than the first threshold, the first prompt element may be set to red; and if the first length difference is less than or equal to the first threshold, the first prompt element may be set to gray.

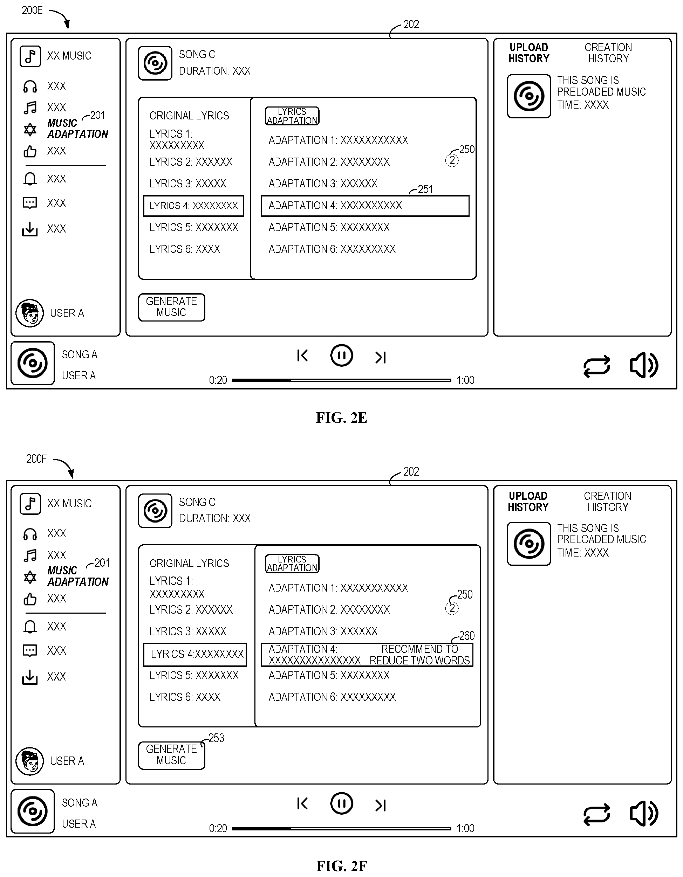

Taking Fig. 2E as an example, in order to highlight the difference between the lyric 2 and the adaptation 2, the electronic device 110 may present a prompt element 250 (first prompt element) in the interface 200E. The prompt element 250 may indicate that the difference (first length difference) between the number of words included in the lyric 2 (the first sentence in the first lyric content) and the number of words included in the adaptation 2 (the second sentence in the second lyric content) is 2, where the lyric 2 corresponds to the adaptation 2, that is, the adaptation 2 is the lyric obtained after adapting the lyric 2.

Taking Fig. 2E as an example, in order to highlight the correlation and difference between the first lyric content and the second lyric content, the electronic device 110 may present the first lyric content and the second lyric content in a predetermined presentation style. The predetermined presentation style may indicate that a first display position of the first sentence in the first lyric content is associated with a second display position of the second sentence in the second lyric content. For example, for each line of lyrics in the first lyric content, the electronic device 110 may present the lyric and the adapted lyric corresponding to the lyric in the second lyric content in the same column or the same row, etc. in the interface 200E. Taking Fig. 2E as an example, the electronic device 110 may display the lyric 1 and the adaptation 1 (the adapted lyric corresponding to the lyric 1) in the same row in the interface 200E, and display the lyric 2 and the adaptation 2 (the adapted lyric corresponding to the lyric 2) in the same row in the interface 200E, and so on.

In some embodiments, the at least one prompt element may further include a second prompt element, which indicates that the difference between a first number of sentences in the first lyric content and a second number of sentences in the second lyric content is greater than a second threshold. The second threshold may be any appropriate threshold, such as 0. For example, if song C includes 20 lines of lyrics, but the second lyric content adapted based on each of the lyrics of song C includes 19 lines of lyrics, the electronic device 110 may present the second prompt element (not shown) in the interface 200E. Specifically, the second prompt element may indicate the difference in number, and may also indicate a target lyric included in the second lyric content, where there is no lyric corresponding to the target lyric in the first lyric content, and so forth.

In some embodiments, the electronic device 110 may adjust at least one sentence corresponding to a target prompt element in the at least one prompt element in the second lyric content, in response to receiving a predetermined operation on the target prompt element. The predetermined operation may be any appropriate operation, such as a click operation, a slide operation, etc. Taking Fig. 2E as an example, the electronic device 110 may adjust the length corresponding to the adaptation 2 to be the same as the length corresponding to the lyric 2, in response to receiving a selection of the prompt element 250.

In some embodiments, the electronic device 110 may further present a lyric edit control for the second lyric content in the interface 200E. Specifically, the lyric edit control may support the user to independently edit each sentence in the second lyric content. Further, the electronic device 110 may receive at least one edit operation for the second lyric content via the lyric edit control, to determine the third lyric content. As an example, the user may use an edit control 260 to edit the adaptation 4, for example, the user may click on the lyric corresponding to the adaptation 4, so that the electronic device 110 may present a text input box 251 for the adaptation 4. Further, the electronic device 110 may receive the content of the edited adaptation 4 via the text input box 251. At this point, the electronic device 110 may present an interface 200F as shown in Fig. 2F. In some embodiments, the electronic device 110 may present the updated adaptation 4 in the interface 200F, where the lyric content composed of the updated adaptation 4 and other adaptations 1, adaptation 2, etc. is the third lyric content.

As an example, the electronic device 110 may present a control 253 in the interface 200F. The control 253 may support the user to input a request (second generation request) for generating new music content. Further, the electronic device 110 may receive the second generation request, in response to receiving an operation that the control 253 is selected.

Further, the electronic device 110 may provide the second music content generated based on the third lyric content and the first music content, in response to receiving the second generation request. As an example, if the third lyric content satisfies the at least one lyric constraint, the electronic device 110 may directly generate the second music content based on the third lyric content and the first music content. As another example, if the third lyric content does not satisfy the at least one lyric constraint, the electronic device 110 may not be able to generate the second music content based on the third lyric content and the first music content.

Taking Fig. 2F as an example, if the length difference between the adaptation 4 in the third lyric content and the lyric 4 is greater than a predetermined threshold, the electronic device 110 may highlight the adaptation 4 in the interface 200F after receiving the operation that the control 253 is selected, for example, the electronic device 110 may highlight the adaptation 4.

In some embodiments, if the length difference between the adaptation 4 in the third lyric content and the lyric 4 is greater than the predetermined threshold, the electronic device 110 may not generate new music content, but present an indication element corresponding to the adaptation 4 in the interface 200F, in response to receiving the operation that the control 253 is selected, and the indication element may be used to indicate a modification suggestion for the adaptation 4, to assist the user to modify the adaptation 4. Taking Fig. 2F as an example, the electronic device 110 may present a modification suggestion 260 for the adaptation 4, to indicate that the user may reduce 2 words on the basis of the current adaptation 4.

As an example, the electronic device 110 may further adjust the content of the adaptation 4 (for example, reduce two words), in response to receiving a predetermined operation corresponding to the modification suggestion 260, to implement quick and automatic modification of the adaptation 4.

It should be noted that when there is a difference between the first sentence in the first lyric content in the first music content and a third sentence in the third lyric content, but the difference is not greater than the threshold, the electronic device 110 may provide a window (not shown) in the interface 200F. The electronic device 110 may present the reason why the new music content cannot be generated and the solution to the problem -- the new music content cannot be generated -- in the window. For example, the electronic device 110 may present in the window the prompt information of "It is detected that the number of words in the adapted lyrics differs too much from that in the original lyrics, which may affect the music generation effect. It is recommended to adjust the number of words in the lyrics according to the prompt". Further, the electronic device 110 may present a first control (such as a select control corresponding to "continue generation") and a second control (such as a select control corresponding to "adjust lyrics") in the window, to support the user to select whether to continue generating new music content based on the currently adapted lyric content. As an example, the electronic device 110 may generate the second music content based on the third lyric content and the first music content, in response to receiving a selection of the first control. As an example, the electronic device 110 may present the interface 200F as shown in Fig. 2F, in response to receiving the selection of the second control, to support the user to continue editing the adapted lyric content.

In some embodiments, the electronic device 110 may use a predetermined model to generate the second music content based on the third lyric content and the first music content. The predetermined model may be any appropriate machine learning model, such as a generative model.

As an example, the electronic device 110 may provide the third lyric content, the first music content and a predetermined prompt item to the predetermined model, to generate the second music content. The predetermined prompt item may be used to indicate relevant constraints on the generated music content, for example, it may be used to constrain that the melody information corresponding to the second music content to be generated is the same as the melody information of the first music content, etc.

In some embodiments, the second music content has melody information corresponding to the first music content. The melody information indicates melody features and structural information in the music content, such as melody, rhythm, treble, harmony, etc.

Based on this method, the embodiments of the disclosure can quickly generate other second lyric content based on the first lyric content of the first music content in response to the generation request, which improves the efficiency of lyric adaptation. In addition, the embodiments of the disclosure may further determine the third lyric content based on the second lyric content, and quickly generate new music content according to the third lyric content and the first music content, which not only ensures the quality of music content generation, but also improves the efficiency of music generation.

### Example Process

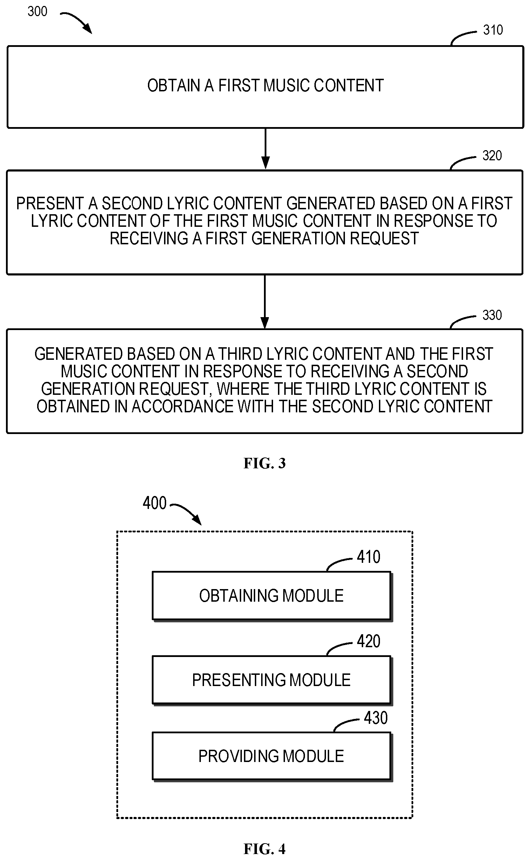

Fig. 3 shows a flowchart of a process 300 of generating music according to some embodiments of the disclosure. The process 300 may be implemented at the electronic device 110. The process 300 is described below with reference to Fig. 1.

At block 310, the electronic device 110 obtains a first music content.

At block 320, the electronic device 110 presents a second lyric content generated based on a first lyric content of the first music content, in response to receiving a first generation request.

At block 330, the electronic device 110 provides a second music content generated based on a third lyric content and the first music content, in response to receiving a second generation request, where the third lyric content is obtained in accordance with the second lyric content.

Based on this method, the embodiments of the disclosure can quickly generate other second lyric content based on the first lyric content of the first music content in response to the generation request, which improves the efficiency of lyric adaptation. In addition, the embodiments of the disclosure may further determine the third lyric content based on the second lyric content, and quickly generate new music content according to the third lyric content and the first music content, which not only ensures the quality of music content generation, but also improves the efficiency of music generation.

In some embodiments, the process 300 further includes: presenting a first interface, in response to obtaining the first music content; and receiving the first generation request based on input information received via the first interface.

In this way, the embodiments of the disclosure may receive the input information via the first interface, which improves the user's participation and interactivity, and enables the user to participate in the secondary creation process of the music content more directly, thereby improving the interaction efficiency and interaction experience.

In some embodiments, the input information indicates at least one of: text content input via the first interface; or and a selection of at least one candidate item in the first interface.

In this way, the embodiments of the disclosure can ensure that the user can select the required text content or make a selection from the candidate items via the first interface, which simplifies the submission process of the generation request and improves the interaction efficiency.

In some embodiments, the input information indicates at least one attribute of the second lyric content to be generated.

In this way, the embodiments of the disclosure can set the attribute of the second lyric content to be generated, so as to enhance the flexibility and pertinence of lyric generation.

In some embodiments, the second lyric content is generated based on the following process: providing the first lyric content and prompt information to a model to generate the second lyric content, the prompt information indicating at least one lyric constraint.

In this way, the embodiments of the disclosure can generate the second lyric content that meets specific constraints based on the first lyric content and the prompt information, improving the accuracy and applicability of lyric generation.

In some embodiments, the at least one lyric constraint includes a length constraint, where the length constraint indicates a length of each line of lyrics in the second lyric content to be generated.

In this way, the embodiments of the disclosure may improve the generation quality of the second lyric content by constraining the length of each line of lyrics in the second lyric content.

In some embodiments, the length constraint is obtained in accordance with lengths of multiple lines of lyrics in the first lyric content.

In this way, the embodiments of the disclosure may ensure that the generated second lyric content matches the first lyric content in terms of the line length via the length constraint, which facilitates maintaining the rhyme and structural consistency of the music work.

In some embodiments, the second lyric content is generated based on the following process: obtaining an intermediate lyric content generated by a model; and adjusting a lyric part of the intermediate lyric content based on the first lyric content to determine the second lyric content, in response to the intermediate lyric content including the lyric part that does not satisfy a preset constraint.

In this way, the embodiments of the disclosure may improve the quality and compliance of lyric generation by obtaining the intermediate lyric content and adjusting it according to the preset constraint.

In some embodiments, the process 300 further includes: presenting at least one prompt element in association with the second lyric content, the at least one prompt element indicating a difference between the first lyric content and the second lyric content.

In this way, the embodiments of the disclosure may intuitively display the difference between the first lyric content and the second lyric content via the prompt element, to help the user quickly identify and understand the part that needs to be adjusted, thereby improving the efficiency and accuracy of editing, and improving the information transfer efficiency.

In some embodiments, the at least one prompt element includes a first prompt element indicating a first length difference between a first sentence in the first lyric content and a second sentence in the second lyric content, the first sentence corresponding to the second sentence.

In this way, the embodiments of the disclosure may ensure that when it is detected that the difference in the lyric length exceeds the preset threshold, the user is reminded to adjust the lyrics in time via the prompt element, thereby ensuring the consistency in length of the generated lyric content, and improving the information transfer efficiency.

In some embodiments, presenting the at least one prompt element in association with the second lyric content includes: presenting the first prompt element associated with the first sentence and the second sentence, in response to the first length difference being greater than a first threshold.

In this way, the embodiments of the disclosure may present the prompt element when the length difference between the first sentence and the second sentence is greater than the threshold, which avoids redundant display of superfluous information, and improves the information transfer efficiency.

In some embodiments, a first display position of the first sentence is related to a second display position of the second sentence.

In this way, the embodiments of the disclosure may display the positions of the first sentence and the second sentence in association, which makes it easier for the user to view and understand the correlation and difference between the first sentence and the second sentence, and improves the information transfer efficiency.

In some embodiments, the at least one prompt element includes a second prompt element indicating that a difference between a first number of sentences in the first lyric content and a second number of sentences in the second lyric content is greater than a second threshold.

In this way, the embodiments of the disclosure may indicate the difference in the number of sentences via the prompt element, to help the user identify problems that may affect the music rhythm and structure, so as to make corresponding adjustments during the editing process.

In some embodiments, the process 300 further includes: adjusting at least one sentence corresponding to a target prompt element in the at least one prompt element in the second lyric content, in response to receiving a predetermined operation on the target prompt element.

In this way, the embodiments of the disclosure may adjust the corresponding sentence in the second lyric content by performing the predetermined operation on the target prompt element in the prompt element, which improves the flexibility of lyric editing and improves the efficiency of lyric editing.

In some embodiments, the process 300 further includes: providing a lyric edit control associated with the second lyric content; and receiving at least one edit operation for the second lyric content via the lyric edit control, to determine the third lyric content.

In this way, the embodiments of the disclosure may perform the edit operation on the second lyric content based on the lyric edit control to determine the third lyric content, which may effectively improve the editing efficiency, and supporting editing the lyric content may effectively improve the accuracy of the lyric content.

In some embodiments, obtaining the first music content includes: obtaining a reference music content; presenting a crop interface including a first edit control and a second edit control, the first edit control presenting a reference lyric content of the reference music content, and the second edit control presenting a timeline associated with the reference music content; and cropping the reference music to obtain the first music content, in response to determining a selected portion of the reference lyric content via the first edit control or determining a selected segment of the timeline via the second edit control.

In this way, the embodiments of the disclosure may accurately crop the reference music to obtain the required first music content through the first edit control or the second edit control, which improves the accuracy of music editing. In addition, the embodiments of the disclosure provide two types of edit controls corresponding to different types, and crop the parameter music via different editing methods, which improves the flexibility of editing.

In some embodiments, the process 300 further includes: coordinately adjusting the selected segment in the second edit control based on a first operation on the first edit control; or coordinately adjusting the selected portion in the first edit control based on a second operation on the second edit control.

In this way, the embodiments of the disclosure may coordinately adjust the selected portion and period in the first edit control and the second edit control, which may avoid the problem of different music content cropped based on different edit controls, and may effectively improve the accuracy of cropping music content.

### Example Apparatus and Device

The embodiments of the disclosure further provide a corresponding apparatus for implementing the above method or process. Fig. 4 shows a schematic structural block diagram of an apparatus 400 for touch interaction according to some embodiments of the disclosure. The apparatus 400 may be implemented as or included in the electronic device 110 as discussed above. Each module/component in the apparatus 400 may be implemented by hardware, software, firmware, or any combination thereof.

As shown in Fig. 4, the apparatus 400 includes an obtaining module 410 configured to obtain a first music content; a presenting module 420 configured to present a second lyric content generated based on a first lyric content of the first music content, in response to receiving a first generation request; and a providing module 430 configured to provide a second music content generated based on a third lyric content and the first music content, in response to receiving a second generation request, where the third lyric content is obtained in accordance with the second lyric content.

In some embodiments, the apparatus 400 further includes an interface presenting module configured to: present a first interface, in response to obtaining the first music content; and a first receiving module configured to: receive the first generation request based on input information received via the first interface.

In some embodiments, the input information indicates at least one of the following: text content input via the first interface; or a selection of at least one candidate item in the first interface.

In some embodiments, the input information indicates at least one attribute of the second lyric content to be generated.

In some embodiments, the second lyric content is generated based on the following process: providing the first lyric content and prompt information to a model to generate the second lyric content, the prompt information indicating at least one lyric constraint.

In some embodiments, the at least one lyric constraint includes a length constraint, where the length constraint indicates a length of each line of lyrics in the second lyric content to be generated.

In some embodiments, the length constraint is obtained in accordance with lengths of multiple lines of lyrics in the first lyric content.

In some embodiments, the second lyric content is generated based on the following process: obtaining an intermediate lyric content generated by a model; and adjusting a lyric part of the intermediate lyric content based on the first lyric content to determine the second lyric content, in response to the intermediate lyric content including the lyric part that does not satisfy a preset constraint.

In some embodiments, the apparatus 400 further includes an element presenting module configured to: present at least one prompt element in association with the second lyric content, the at least one prompt element indicating a difference between the first lyric content and the second lyric content.

In some embodiments, the at least one prompt element includes a first prompt element indicating a first length difference between a first sentence in the first lyric content and a second sentence in the second lyric content, the first sentence corresponding to the second sentence.

In some embodiments, the element presenting module is further configured to present the first prompt element associated with the first sentence and the second sentence, in response to the first length difference being greater than a first threshold.

In some embodiments, a first display position of the first sentence is related to a second display position of the second sentence.

In some embodiments, the at least one prompt element includes a second prompt element indicating that a difference between a first number of sentences in the first lyric content and a second number of sentences in the second lyric content is greater than a second threshold.

In some embodiments, the apparatus 400 further includes a first adjustment module configured to: adjust at least one sentence corresponding to a target prompt element in the at least one prompt element in the second lyric content, in response to receiving a predetermined operation on the target prompt element.

In some embodiments, the apparatus 400 further includes a control providing module configured to: provide a lyric edit control associated with the second lyric content; and a second receiving module configured to receive at least one edit operation for the second lyric content via the lyric edit control, to determine the third lyric content.

In some embodiments, the obtaining module 410 is further configured to: obtain a reference music content; present a crop interface including a first edit control and a second edit control, the first edit control presenting a reference lyric content of the reference music content, and the second edit control presenting a timeline associated with the reference music content; and crop the reference music to obtain the first music content, in response to determining a selected portion of the reference lyric content via the first edit control or determining a selected segment of the timeline via the second edit control.

In some embodiments, the apparatus 400 further includes a second adjustment module configured to: coordinately adjust the selected segment in the second edit control based on a first operation on the first edit control; or coordinately adjust the selected portion in the first edit control based on a second operation on the second edit control.

The units included in the apparatus 400 may be implemented in various ways, including software, hardware, firmware, or any combination thereof. In some embodiments, one or more units may be implemented using software and/or firmware, such as machine executable instructions stored on a storage medium. In addition to machine executable instructions or as an alternative, some or all units in the apparatus 400 may be implemented at least partially by one or more hardware logic components. As an example, rather than a limitation, example types of hardware logic components that may be used include field programmable gate arrays (FPGA), application specific integrated circuits (ASIC), application specific standard parts (ASSP), system on chip (SOC), complex programmable logic devices (CPLD), and so on.

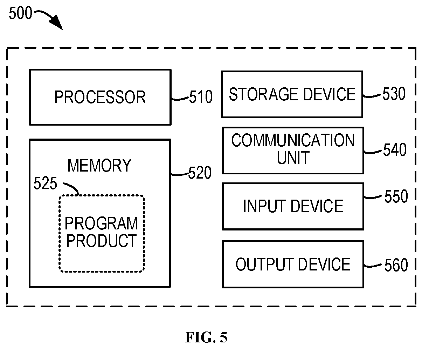

Fig. 5 shows a block diagram of an electronic device 500 in which one or more embodiments of the disclosure may be implemented. It should be understood that the electronic device 500 shown in Fig. 5 is only illustrative, and should not constitute any limitation on the function and scope of the embodiments described herein. The electronic device 500 shown in Fig. 5 may be used to implement the electronic device 110 shown in Fig. 1.

As shown in Fig. 5, the electronic device 500 is in the form of a general electronic device. The components of the electronic device 500 may include, but are not limited to, one or more processors or processing units 510, a memory 520, a storage device 530, one or more communication units 540, one or more input devices 550, and one or more output devices 560. The processor 510 may be an actual or virtual processor, and may execute various processes based on the programs stored in the memory 520. In a multi-processor system, multiple processors execute computer executable instructions in parallel to improve the parallel processing capability of the electronic device 500.

The electronic device 500 typically includes multiple computer storage medium. Such medium may be any available medium that is accessible to the electronic device 500, including but not limited to volatile and non-volatile medium, removable and non-removable medium. The memory 520 may be a volatile memory (for example, a register, cache, a random access memory (RAM)), a non-volatile memory (such as a read-only memory (ROM), an electrically erasable programmable read-only memory (EEPROM), a flash memory), or any combination thereof. The storage device 530 may be any removable or non-removable medium, and may include a machine readable medium such as a flash drive, a disk, or any other medium, which may be used to store information and/or data (such as training data for training) and may be accessed within the electronic device 500.

The electronic device 500 may further include other removable/non-removable, volatile/non-volatile storage medium. Although not shown in Fig. 5, it is possible to provide a disk drive for reading from or writing to removable, non-volatile disks (such as "floppy disks"), and an optical disk drive for reading from or writing to removable, non-volatile optical disks. In these cases, each drive may be connected to the bus (not shown) by one or more data medium interfaces. The memory 520 may include a computer program product 525, which has one or more program modules configured to perform various methods or actions of various embodiments of the disclosure.

The communication unit 540 enables communication with other electronic devices through the communication medium. Additionally, the functions of the components of the electronic device 500 may be implemented by a single computing cluster or multiple computing machines, which may communicate through communication connections. Therefore, the electronic device 500 may use a logical connection with one or more other servers, network personal computers (PCs) or other network nodes to operate in a networked environment.

The input device 550 may be one or more input devices, such as a mouse, a keyboard, a tracking ball, etc. The output device 560 may be one or more output devices, such as a display, a speaker, a printer, etc. The electronic device 500 may also communicate with one or more external devices (not shown) as needed through the communication unit 540, the external devices such as a storage device, a display device, etc., communicate with one or more devices that enable a user to interact with the electronic device 500, or communicate with any device (e.g., a network card, a modem, etc.) that enables the electronic device 500 to communicate with one or more other electronic devices. Such communication may be performed via input/output (I/O) interfaces (not shown).

According to an illustrative implementation of the disclosure, there is provided a computer-readable storage medium having computer executable instructions stored thereon, where the computer executable instructions are executed by a processor to implement the method described above. According to an illustrative implementation of the disclosure, there is further provided a computer program product tangibly stored on a non-transitory computer-readable medium and including computer-executable instructions, which are executed by a processor to implement the method described above.

Various aspects of the disclosure are described herein with reference to flowcharts and/or block diagrams of methods, apparatuses, devices and computer program products implemented according to the disclosure. It should be understood that each block of the flowchart and/or block diagram, and combinations of blocks in the flowchart and/or block diagram, may be implemented by computer-readable program instructions.

These computer-readable program instructions may be provided to a processor of a general-purpose computer, a special-purpose computer, or other programmable data processing apparatus to produce a machine, such that these instructions, when executed by the processor of the computer or other programmable data processing apparatus, create means for implementing the functions/actions specified in one or more blocks of the flowchart and/or block diagram. These computer-readable program instructions may also be stored in a computer-readable storage medium, these instructions cause the computer, the programmable data processing apparatus, and/or other devices to work in a particular way, such that the computer-readable medium storing the instructions includes an article of manufacture, which includes instructions for implementing various aspects of the functions/actions specified in one or more blocks of the flowchart and/or block diagram.

The computer-readable program instructions may be loaded onto a computer, another programmable data processing apparatus, or other device, causing a series of operational steps to be performed on the computer, the other programmable data processing apparatus, or the other device to produce a computer-implemented process, such that the instructions executed on the computer, the other programmable data processing apparatus, or the other device implement the functions/actions specified in one or more blocks of the flowchart and/or block diagram.

The flowchart and block diagram in the drawings show the possibly implemented architectures, functions and operations of the system, method and computer program product according to multiple implementations of the disclosure. In this regard, each block in the flowchart or block diagram may represent a module, program segment or part of an instruction, which includes one or more executable instructions for implementing the specified logical functions. In some alternative implementations, the functions marked in the blocks may also occur in an order different from that marked in the drawings. For example, two consecutive blocks may actually be performed substantially in parallel, or they may sometimes be performed in the reverse order, depending on the functions involved. It should also be noted that each block in the block diagram and/or the flowchart, and the combination of the blocks in the block diagram and/or the flowchart, may be implemented by a dedicated hardware-based system that performs specified functions or actions, or may be implemented by a combination of dedicated hardware and computer instructions.

The implementations of the disclosure have been described above. The above description is illustrative, not exhaustive, and is not limited to the disclosed implementations. Without departing from the scope of the described implementations, many modifications and changes will be apparent to those of ordinary skill in the art. The choice of terms used herein is intended to best explain the principles, practical applications, or improvements to the technology in the market of each implementation, or to enable other ordinary technical personnel in the art to understand the various implementations disclosed herein.

## Claims

1. A method (300) for generating music, comprising:
obtaining a first music content;
presenting a second lyric content generated based on a first lyric content of the first music content, in response to receiving a first generation request; and
providing a second music content generated based on a third lyric content and the first music content, in response to receiving a second generation request, wherein the third lyric content is obtained in accordance with the second lyric content.

2. The method (300) of claim 1, further comprising:
presenting a first interface in response to obtaining the first music content; and
receiving the first generation request based on input information received via the first interface.

3. The method (300) of claim 2, wherein the input information indicates at least one of:
text content input via the first interface; or
a selection of at least one candidate item in the first interface,
and/or
wherein the input information indicates at least one attribute of the second lyric content that is to be generated.

4. The method (300) of any preceding claim, wherein the second lyric content is generated based on a process of:
providing the first lyric content and prompt information to a model to generate the second lyric content, the prompt information indicating at least one lyric constraint.

5. The method (300) of claim 4, wherein the at least one lyric constraint comprises a length constraint, wherein the length constraint indicates a length of each line of lyrics in the second lyric content that is to be generated,
and/or
wherein the length constraint is obtained in accordance with lengths of multiple lines of lyrics in the first lyric content.

6. The method (300) of any of claims 3 to 5, wherein the second lyric content is generated based on a process of:
obtaining an intermediate lyric content generated by the model; and
adjusting a lyric part of the intermediate lyric content based on the first lyric content to obtain the second lyric content in response to the intermediate lyric content comprising the lyric part that does not satisfy a preset constraint.

7. The method (300) of any preceding claim, further comprising:
presenting at least one prompt element in association with the second lyric content, the at least one prompt element indicating a difference between the first lyric content and the second lyric content.

8. The method (300) of claim 7, wherein the at least one prompt element comprises a first prompt element, the first prompt element indicating a first length difference between a first sentence in the first lyric content and a second b in the second lyric content, the first sentence corresponding to the second sentence,
and/or
wherein the at least one prompt element comprises a second prompt element, the second prompt element indicating that a difference between a first number of sentences in the first lyric content and a second number of sentences in the second lyric content is greater than a second threshold.

9. The method (300) of claim 7 or 8, wherein presenting the at least one prompt element in association with the second lyric content comprises:
presenting the first prompt element associated with the first sentence and the second sentence in response to the first length difference being greater than a first threshold,
and/or
wherein a first display position of the first sentence is related to a second display position of the second sentence;
and/or
adjusting at least one sentence corresponding to a target prompt element in the at least one prompt element in the second lyric content in response to receiving an operation on the target prompt element.

10. The method (300) of any preceding claim, further comprising:
providing a lyric edit control associated with the second lyric content; and
receiving at least one edit operation for the second lyric content via the lyric edit control to obtain the third lyric content.

11. The method (300) of any preceding claim, wherein obtaining the first music content comprises:
obtaining a reference music content;
presenting a crop interface, the crop interface comprising a first edit control and a second edit control, the first edit control presenting reference lyric content of the reference music content, and the second edit control presenting a timeline associated with the reference music content; and
cropping the reference music to obtain the first music content in response to obtaining a selected portion of the reference lyric content via the first edit control or obtaining a selected segment of the timeline via the second edit control.

12. The method (300) of claim 11, further comprising:
coordinately adjusting the selected segment in the second edit control based on a first operation on the first edit control; or
coordinately adjusting the selected portion in the first edit control based on a second operation on the second edit control.

13. An apparatus (400) for generating music, comprising:
an obtaining module (410) configured to obtain a first music content;
a presenting module (420) configured to present a second lyric content generated based on a first lyric content of the first music content, in response to receiving a first generation request; and
a providing module (430) configured to provide a second music content generated based on a third lyric content and the first music content, in response to receiving a second generation request, the third lyric content obtained in accordance with the second lyric content.

14. An electronic device (500), comprising:
at least one processor (510); and
at least one memory, the at least one memory coupled to the at least one processor (510), and storing instructions executable by the at least one processor (510), the instructions, when executed by the at least one processor (510), cause the electronic device (500) to perform the method (300) of any of claims 1 to 12.

15. A computer-readable storage medium having a computer program stored thereon, the computer program being executable by a processor to perform the method (300) of any of claims 1 to 12.
